# FASCICULE DE BREVET EUROPEEN

(11) **EP 0 635 805 B1**
(45) Date de publication et mention de la délivrance du brevet: **31.10.2001**
(21) Numéro de dépôt: 94202092.6
(22) Date de dépôt: 18.07.1994
(51) Int. Cl.: G06T 7/00, H04N 5/32

(54) **Procédé de traitement d'images numériques pour la détection automatique de sténoses**
Verfahren zur Verarbeitung von digitalen Bildern für die automatische Detektion von Stenosen
Method for processing digital pictures for the automatic detection of stenosis

(30) Priorité: 22.07.1993 FR 9309055
(43) Date de publication de la demande: 25.01.1995
(73) Titulaire: Koninklijke Philips Electronics N.V., 5621 BA Eindhoven (NL)
(72) Inventeur: Makram-Ebeid, Shérif, F-75008 Paris (FR)
(74) Mandataire: Lottin, Claudine

(56) Documents cités:
- DE-A- 3 617 126
- PROCEEDINGS OF THE ANNUAL INTERNATIONAL CONFERENCE OF THE IEEE ENGINEERING IN MEDICINE AND BIOLOGY SOCIETY, NEW-ORLEANS(US) '4-7 November 1988' , GERLOT ET AL: , P.432-433 * le document en entier *
- PATTERN RECOGNITION LETTERS, vol.8, no.5, Décembre 1988, AMSTERDAM NL pages 353 - 358 COLLOREC ET AL 'Vectorial tracking and directed contour finder for vascular network in digital subtraction angiography'
- COMPUTERS IN CARDIOLOGY, BOSTON(US),7-10 OCTOBER 1986 'SUN ET AL:"A HIERARCHICAL SEARCH ALGORITHM FOR IDENTIFICATION OF CORONARY ARTERY CONTOURS IN DIGITAL ANGIOGRAMS",P.583-586' * le document en entier *
- IEEE TRANSACTIONS ON MEDICAL IMAGING, vol.8, no.1, Mars 1989, NEW YORK US pages 78 - 88 SUN 'AUTOMATED IDENTIFICATION OF VESSEL CONTOURS IN CORONARY ARTERIOGRAMS BY AN ADAPTIVE TRACKING ALGORITHM'

## Description

L'invention concerne un procédé de traitement d'images numérisées en imagerié angiographique pour la détection automatique de sténoses comprenant au moins une étape d'identification des pixels ou des points situés sur les lignes centrales des vaisseaux, dites étape de "tracking".

L'invention trouve par exemple son application dans le domaine des systèmes de formation d'images numérisées, pour aider à la détection d'anomalies telles que des sténoses à partir d'angiographies du corps humain ou animal.

Les angiographies sont des images spécialisées, pour la visualisation des vaisseaux sanguins. Plusieurs types d'angiographies sont réalisables : les angiographies coronariennes, pour la visualisation des artères irriguant le muscle du coeur, ou myocarde, l'ensemble de ces artères formant l'arbre coronarien ; les angiographies périphériques pour visualiser l'irrigation des membres inférieurs et supérieurs ; les angiographies cérébrales. On s'intéressera ci-après à titre d'exemple aux angiographies coronariennes. Les sténoses sont des rétrécissements locaux provoqués par des obstructions partielles ou totales qui apparaissent sur des artères. Dans le cas de l'arbre coronarien, les sténoses compromettent gravement l'irrigation du myocarde et doivent être détectées par un praticien à partir des angiographies.

L'introduction, ces dernières années, de la radiographie numérisée, qui combine l'utilisation d'un détecteur de rayons X donnant une image en temps réel et la numérisation des images, a constitué un progrès majeur dans le domaine de la formation d'images, par rapport à la radiographie conventionnelle. Elle donne en effet accès aux nombreuses possibilités offertes par les techniques de traitement numérique d'images.

D'autres méthodes de formation d'images angiographiques sont également connues, telles que les méthodes utilisant la résonance magnétique nucléaire.

Dans tous les cas, l'invention ne tient pas compte de la méthode par laquelle l'image numérique a été obtenue, ni de la nature des objets qu'elle représente, mais concerne seulement le traitement de cette image numérique pour déterminer les points centraux et les points des bords des objets représentés, pourvu que ces objets constituent des masses suffisamment uniformes contrastant sur un fond suffisamment uniforme.

Un procédé d'identification automatisé des contours de vaisseaux dans des angiographies coronariennes est connu de la publication intitulée "Automated Identification of Vessel Contours in Coronary Arteriograms by an adaptive Tracking Algorithm", par Ying SUN, dans IEEE Transactions on Medical Imaging, Vol.8, N°1, March 1989. Ce document décrit un algorithme de "suivi du tracé" dit "tracking" de la ligne centrale des vaisseaux, pour l'identification des contours de ces vaisseaux dans des angiographies numérisées. L'algorithme comprend essentiellement trois étapes qui sont :
1°) L'identification des points situés sur la ligne centrale d'un vaisseau. Chaque point de la ligne centrale a trois attributs : sa position, la direction d'un vecteur parallèle à la direction du tronçon de vaisseau auquel appartient le point, la demi-largeur du vaisseau en ce point. Une fois donné un point Pₖ de départ sur la ligne centrale du vaisseau, l'algorithme calcule un point 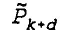 à une distance donnée d dans la direction du vecteur attribut du point de départ Pₖ. Ensuite un filtrage convolutif est effectué au moyen d'un filtre rectangulaire d'orientation principale perpendiculaire audit vecteur, c'est-à-dire parallèle à la direction de balayage au point de départ Pₖ.
   Ce filtrage permet d'identifier un point P'_{k+d}, déterminé en effectuant la convolution entre le profil de densité le long de la ligne de balayage passant par le point 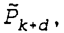 et un profil de densité idéal de forme rectangulaire. Le résultat de la convolution fournit un vecteur dont on cherche la valeur maximale, laquelle est relative à un pixel qui correspond au maximum du profil de densité et permet la mise à jour du nouveau point P'_{k+d}.
2°) L'identification des bords du vaisseau : les bords du vaisseau correspondant au nouveau point P'_{k+d} sont identifiés comme la position des points d'inflexion sur un profil de densité transversal, c'est-à-dire perpendiculairement à un vecteur attribut du point P'_{k+d} résultant d'une mise à jour. La demi-largeur du vaisseau est alors aussi mise à jour, puis le nouveau point P_{k+d} de la ligne de centre recherché est enfin identifié.
   Le procédé est répété pour tous les points situés sur des lignes de balayage perpendiculaires au premier vecteur attribut du point de départ Pₖ, de k+1 à k+d. Ce vecteur de direction est maintenu le même sur toute la distance d.
   Dans le cas d'une bifurcation, le procédé choisit la branche de vaisseau qui a la densité la plus grande, de sorte que le profil de densité mis à jour ne montre plus de double pic.
3°) Moyennage spatial : ce procédé de "suivi de tracé" ou "tracking" génère une description du vaisseau en N entrées. Chaque entrée est caractérisé par un triplet = position d'un point sur la ligne de centre du vaisseau ; direction d'un vecteur parallèle à la ligne de centre dans un tronçon de longueur d choisie en fonction de la courbure du vaisseau ; demi-largeur du vaisseau en ce point.

Un premier problème technique qui se pose dans le traitement d'image des angiographies est la détection de toutes les situations pathologiques, et l'élimination des fausses alarmes.

Les situations pathologiques qui doivent être détectées ne comprennent pas uniquement les sténoses qui apparaissent sous la forme d'un rétrécissement local dans un vaisseau, lequel montre donc simplement un minimum local de largeur. Les situations pathologiques comprennent aussi un type de rétrécissement dits "en marche d'escalier" qui apparaît sur un vaisseau d'une première largeur sensiblement uniforme, par le passage abrupte à une seconde largeur inférieure à la première. Ce genre de "marche d'escalier" peut signifier que l'on a affaire à un vaisseau dit principal, d'une première largeur, qui se divisait en deux vaisseaux dont l'un, de la seconde largeur, est toujours visible dans le prolongement du vaisseau principal, mais dont l'autre est maintenant complètement occlus à partir de son embranchement avec le vaisseau principal et a désormais disparu, étant devenu complètement invisible sur l'angiographie.

L'unique moyen de détecter ce vaisseau complètement occlus et désormais invisible, est de détecter le rétrécissement en "marche d'escalier" sur le vaisseau principal.

Cette dernière situation pathologique ne peut pas être reconnue par l'algorithme décrit dans l'état de la technique cité. Ainsi, le procédé connu est incapable de distinguer le cas où il apparaît une "marche d'escalier" dû au fait qu'à l'embranchement l'un des deux vaisseaux secondaires a complètement disparu qui est un cas pathologique grave, du cas non pathologique où le vaisseau fait un coude naturel. Comme la forme caractéristique en "marche d'escalier" est l'unique alarme permettant au praticien de déceler les vaisseaux occlus, ce type d'algorithme n'offre pas au praticien la possibilité de détecter ces situations pathologiques qui sont à la fois importantes en nombre et en gravité regardant l'état du patient.

Un second problème technique qui se pose est la réalisation de systèmes de formation d'images médicales munis de moyens pour la détection totalement automatique des situations pathologiques décrites plus haut.

Il est donc important que le praticien puisse disposer d'un système de mise en évidence des situations pathologiques de manière à attirer son attention sur les endroits des images, ou les endroits de l'unique ou des quelques images de la séquence qui contiennent (contient) en fait les informations les plus intéressantes, qu'il est indispensable d'examiner. Son attention pourra ainsi être attirée sur les endroits les moins vraisemblables a priori, mais qui contiennent néanmoins des situations pathologiques ; et par ailleurs, son attention pourra être détournée de se focaliser sur quelques sténoses évidentes mais sans grande importance sur le plan des suites médicales.

Une telle automatisation totale de la détection des situations pathologiques n'est pas obtenues par l'algorithme connu du document cité.

La présente invention a pour but de proposer un procédé capable de détecter automatiquement au moins le premier et le second type de situations pathologiques décrites précédemment.

L'invention a aussi pour but de fournir un système capable d'éliminer automatiquement et au mieux les erreurs. Il existe deux types d'erreurs possibles dans la détection des sténoses : les faux positifs et les faux négatifs. Par faux positifs ou fausse alarme, on entend une sténose détectée à tort, c'est-à-dire l'identification d'une zone comme contenant une sténose alors que la zone localisée contient en réalité un vaisseau dépourvu de sténose ; ou encore l'identification d'une zone comme contenant une sténose alors qu'elle contient un élément autre qu'un vaisseau. Par faux négatif, on entend, une sténose non détectée, c'est-à-dire la non identification d'une zone contenant une situation pathologique.

Selon l'invention ce but est atteint au moyen d'un procédé défini dans le préambule de la revendication independante 1 et caractérisé en ce qu'il comprend ensuite une étape de détection des sténoses par la mesure des intensités des pixels le long des lignes centrales des vaisseaux, cette étape comprenant une sous-étape de décision qu'une zone de pixels est une zone de sténose potentielle lorsque l'intensité de ses pixels subit une variation locale pour prendre une valeur intermédiaire entre l'intensité des pixels de part et d'autre de cette zone, et l'intensité des pixels du fond de l'image ; une sous-étape de délimitation d'une "icône" autour des zones de sténoses potentielles ; et une sous-étape d'extraction des pixels de bords des vaisseaux dans les "icônes", et caractérisé en ce qu'il comprend en outre une étape de détermination de la gravité des sténoses et de détermination des fausses alarmes menée à bien par un réseau de neurones qui fournit pour chaque sténose potentielle le taux de probabilité qu'il s'agisse d'une vraie sténose ou d'une fausse alarme.

L'invention est décrite ci-après en détail en référence avec les FIG. schématiques annexées, parmi lesquelles :
- la FIG.1 représente un système de radiographie numérique ;
- la FIG.2 représente un diagramme de blocs fonctionnels correspondant aux différentes étapes de l'invention ;
- les FIG.3A et 3B représentent des vaisseaux avec différents types de sténoses ;
- la FIG.4A représente l'image de l'arbre coronarien après extraction du fond et la FIG.4B après extraction des pixels des lignes centrales (tracking) ;
- la FIG.5A représente les régions de sténoses détectées et repérées par des cadres rectangulaires sur une image d'arbre coronarien (23 sténoses) et la FIG.5B représente dans la même image d'arbre coronarien, les régions de sténoses retenues après l'étape de détection neuronale et élimination de fausses alarmes (5 sténoses retenues) ;
- la FIG.6 représente la courbe de ROC.

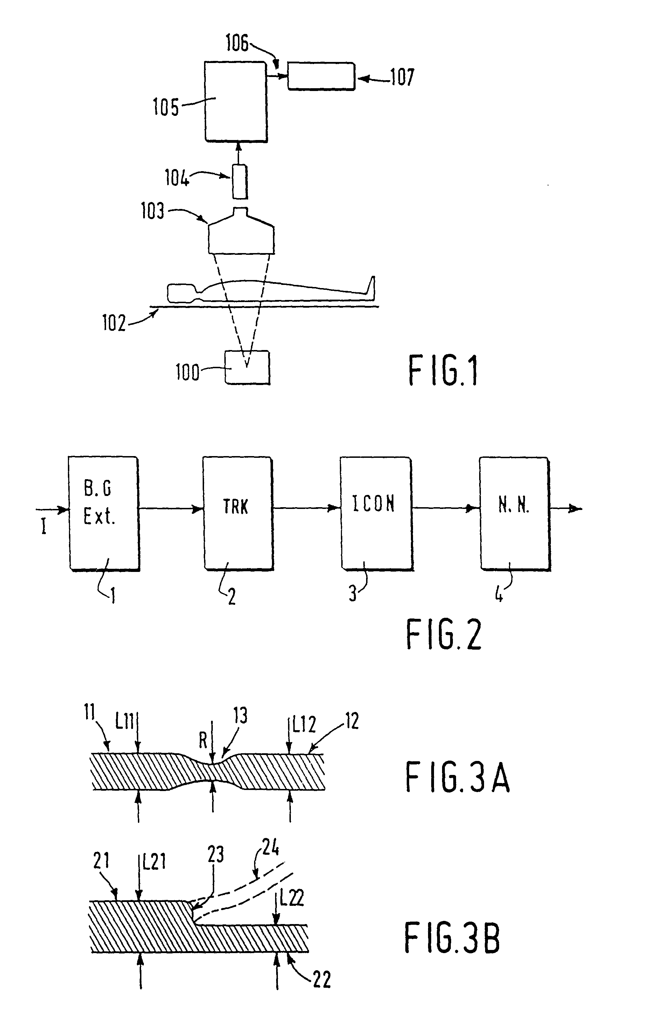

En référence avec la FIG.1, un système de radiographie numérisée comprend un générateur 100 de rayons X ; une table mobile 102 pour recevoir un patient ; un dispositif intensificateur d'image 103 couplé à un tube vidéo 104, qui fournit des données à un système 105 de traitement numérique d'image comprenant un microprocesseur. Ce dernier comprend plusieurs sorties dont une sortie 106 couplée à un moniteur 107 pour la visualisation de l'image radiographique.

L'image radiographique numérisée peut contenir 512 x 512 pixels, ou 1024 x 1024 pixels par exemple, codés sur 8 niveaux de gris, ou niveaux d'intensité, le niveau d'intensité le plus bas correspondant aux régions les plus sombres.

L'invention propose un procédé de traitement d'images numériques dont les différentes étapes sont représentées sous forme de blocs fonctionnels sur le diagramme de la FIG.2. Ce procédé a pour objet la détection des sténoses d'un premier type qui consistent en rétrécissements locaux des vaisseaux, et les sténoses d'un deuxième type qui consistent en rétrécissements en "marches d'escalier". Ce procédé est également extensible à la détection d'autres anormalités éventuelles selon l'avancement des connaissances médicales.

En référence avec la FIG.3A, une sténose du premier type consiste en un rétrécissement local d'un vaisseau, lequel est d'abord d'une première largeur L11 dans une région 11, puis montre une zone 13 de beaucoup plus faible largeur R sur une petite longueur, et devient enfin d'une seconde largeur L12 à peu près égale à la première largeur L11, dans une région 12. Cette situation pathologique correspond à une occlusion partielle locale du vaisseau.

En référence avec la FIG.3B, une sténose du second type consiste en un rétrécissement 23 abrupte et prolongé d'un vaisseau qui est d'abord d'une première largeur L21 dans une région 21, puis qui passe de façon abrupte à une seconde largeur L22 inférieure à la première largeur L21, dans une région 22. Cette situation pathologique correspond à une occlusion complète d'un vaisseau 24 représenté en trait discontinu, autrefois raccordé aux parties de vaisseau 21 et 22, par un embranchement au niveau de la partie 23, et qui a maintenant complètement disparu des images.

En référence avec la FIG.2, le procédé de traitement d'image comprend les étapes suivantes :

### ETAPE 1 : Soustraction du fond

Cette étape correspond au bloc fonctionnel 1 du diagramme de la FIG.2.

Pour chaque image I de la séquence, on effectue une compression logarithmique de l'échelle des intensités. Les intensités des pixels ainsi transformées deviennent, dans le cas d'une image de rayons X, proportionnelles à l'absorption des rayons X par les objets de l'image. Les vaisseaux apparaissent comme des structures sombres sur un fond plus clair.

On extrait alors le fond de l'image à l'aide d'une opération de fermeture morphologique (notée B.G. Ext. sur la FIG.2) en utilisant un élément structurant à trois dimensions. Plus explicitement, une région de l'image est considérée comme faisant partie du fond soit parce que son intensité varie très lentement dans l'espace, ou alors parce que les objets de petite taille qui s'y trouvent ont un constraste inversé par rapport à celui des vaisseaux (c'est-à-dire clair sur fond sombre). On soustrait algébriquement le fond ainsi évalué de l'image pour obtenir une nouvelle image où le contraste des vaisseaux est fortement réhaussé. On réduit ensuite le bruit subsistant dans le fond de l'image à l'aide d'une opération de seuillage dynamique.

Au sujet de l'opération de fermeture morphologique en utilisant un élément structurant, l'homme du métier lira avec profit la publication intitulée "Optimization of Morphological Structuring Elements for Angiogram Enhancement" par Keith M. ANDRESS et David L.WILSON, dans SPIE, Vol.1445 Image processing, 1991, pp.6-10.

A la suite de cette première étape, l'image ne contient plus en principe que le seul arbre coronarien tel que montré à titre d'exemple sur la FIG.4A. Sur cette FIG.4A, dans l'image numérique, les vaisseaux apparaissent maintenant comme des rubans sombres sur un fond pratiquement blanc.

Le procédé de traitement d'images numériques comprend, à partir de là, les étapes fondamentales qui sont, dans l'ordre : l'estimation robuste des points des lignes centrales des vaisseaux ; la détection des pathologies potentielles ; la détermination, limitée aux régions de pathologie, des bords des vaisseaux à partir de la connaissance robuste des points des lignes centrales ; la détermination et le rejet des fausses alarmes.

L'ensemble du procédé a pour objet non seulement l'aide au diagnostic par les opérations de localisation des diverses pathologies et le rejet des fausses alarmes, mais encore l'automatisation complète de ces opérations.

### ETAPE 2 - Estimation des points des lignes centrales des vaisseaux

Cette étape, représentée par le bloc 2 de la FIG.2, et notée TRK sur ce bloc 2 (pour Tracking) est choisie parmi les méthodes capables de conduire à la détermination robuste des coordonnées des points ou pixels localisés sur les lignes centrales ou médianes des vaisseaux, ces lignes formant ce que l'homme du métier appelle le squelette de l'arbre coronarien.

Le choix de la méthode pour la détermination du squelette de l'arbre coronarien est laissé à l'homme du métier. On utilisera par exemple la méthode décrite dans la demande de brevet français déposée le 16 février 1994, sous le N°94 01770 ou encore la méthode décrite dans la demande de brevet français déposée le 22 juillet 1993 sous le N°93 09055.

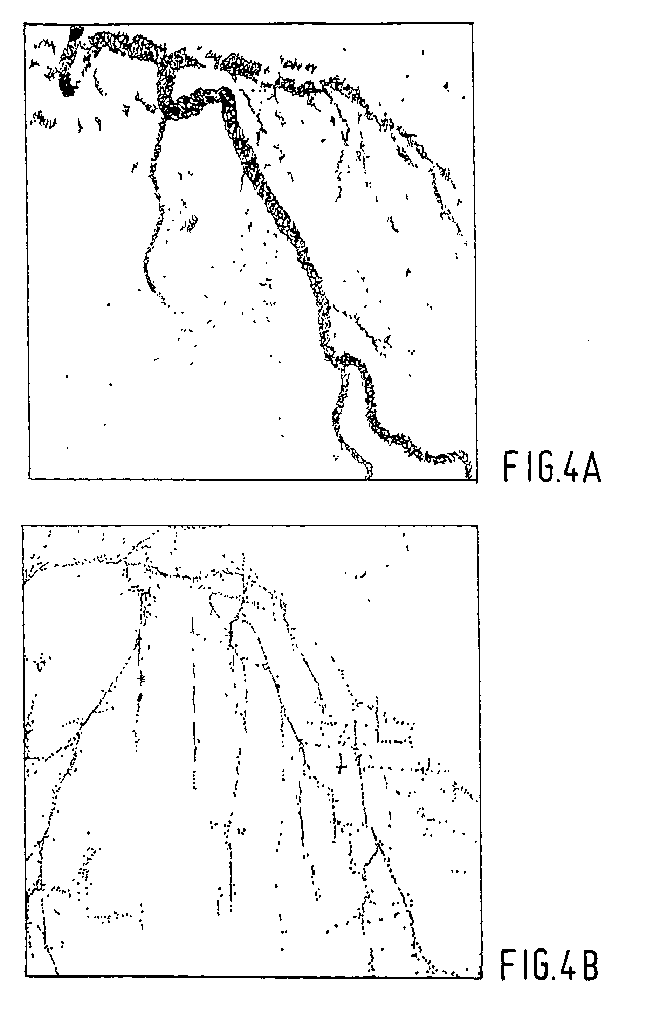

Le squelette de l'arbre coronarien apparaît alors tel que sur la FIG.4B, uniquement formé des points, résultant du traitement dans cette ETAPE 2, appliqué sur l'image angiographique de la FIG.4A, qui sont localisés sur les lignes médianes des vaisseaux sanguins, et dont l'intensité est maintenant une donnée robuste, disponible en fonction des coordonnées de ces points dans l'image numérique traitée.

Dans cette étape, l'homme du métier n'est pas intéressé par la localisation des points de contour des vaisseaux, mais par le seul squelette des vaisseaux. Il doit cependant privilégier les méthodes robustes.

### ETAPE 3 Localisation des sténoses

A ce stade, le long de la ligne médiane des vaisseaux, s'il n'existe pas de sténoses, la réponse en intensité doit normalement être sensiblement uniforme et forte. Par contre, s'il existe une sténose, l'intensité à l'endroit de la sténose dans le vaisseau augmente, c'est-à-dire qu'à l'endroit de la sténose, le vaisseau au lieu d'apparaître comme un ruban pratiquement noir sur fond clair, montre un niveau intermédiaire entre ce niveau noir et le fond clair. Il est évident que si l'homme du métier a choisi une méthode représentant le vaisseau en blanc sur fond noir, ce résultat est inversé, c'est-à-dire que pour un vaisseau blanc, donc de forte intensité, cette intensité diminue en cas de sténose, et la zone de sténose tend vers le gris, donc également une intensité intermédiaire entre celle du vaisseau et celle du fond.

Dans tous les cas, ceci se répercute sur l'intensité du point central du vaisseau à l'emplacemment de la sténose. Dans le cas exemple où le vaisseau est noir, l'intensité du point ou de spoints situés sur la ligne médiane du vaisseau au niveau de la sténose est alors plus élevée que celles des points situés sur cette ligne médiane, en amont et en aval de cette zone de sténose.

Dans cette ETAPE 3, représentée par le bloc 3 de la FIG.2, l'intensité des points situés sur la ligne médiane des vaisseaux est donc examinée, et les points qui présentent une variation locale, c'est-à-dire dans le cas exemple, une augmentation locale de l'intensité, sont identifiés comme appartenant à une ou des régions(s) de sténose.

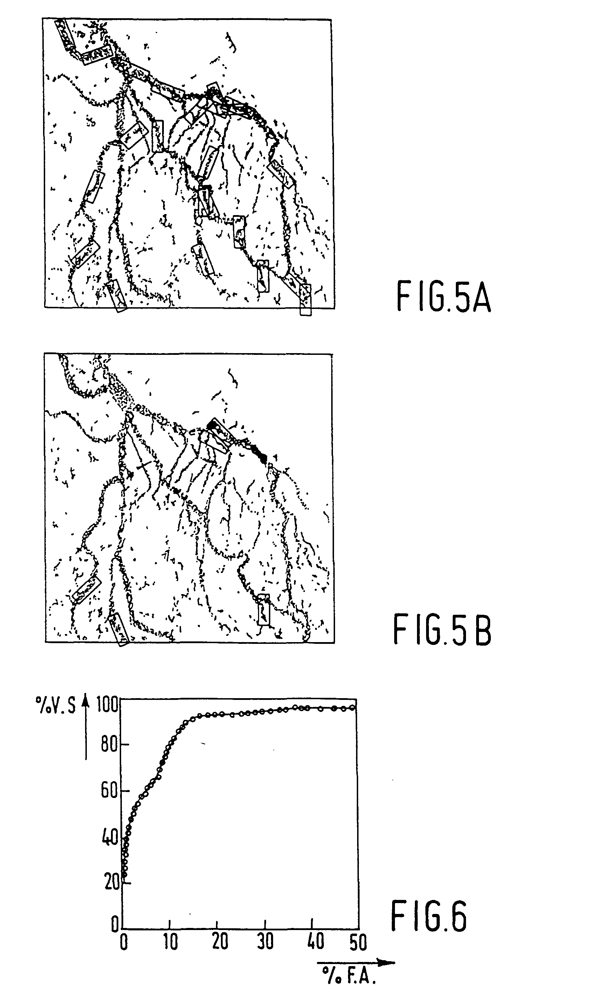

Ces sténoses potentielles sont mises en évidence sur l'image numérisée par des repères visuels, connus de l'homme du métier, tels que des croix dont les branches entourent la zone de sténose, ou bien des cercles entourant ces zones, ou bien des rectangles de grand axe parallèle à la ligne centrale du vaisseau encadrant ces zones, comme montré sur la FIG.5A. L'image de la région ainsi entourée ou encadrée est appelée ci-après "icône".

A ce stade du procédé de traitement d'image (noté ICON pour icône dans la FIG.2), on a donc considérablement diminué le nombre de points de l'image qui doivent être examinés. En effet, si on examine une image à pleine résolution de 512 x 512 pixels, au départ tous les points sont suspects, ce qui correspond à environ 260 000 points suspects. A ce stade de l'invention, où il reste à examiner seulement les points localisés dans les icônes (FIG.5A), on a réduit le nombre des points suspects à environ 200 à 1000 points.

A ce stade du procédé, on examine donc individuellement les vaisseaux dans les "icônes", chaque icône contenant normalement seulement un tronçon vaisseau. Par une opération de segmentation, on détecte maintenant les bords de ce vaisseau dans chaque "icône". L'icône est d'abord rapportée à ses axes de coordonnées propres. Puis les bords du vaisseau sont déterminés par exemple en calculant la dérivée du profil d'intensité perpendiculairement à l'axe de la ligne centrale du vaisseau dans l'icône. Le point de bord du vaisseau est alors retenu comme celui où se situe un point d'inflexion de la courbe d'intensité. Par une opération de regroupement des points de bord par paires, les lignes de bord du vaisseau contenu dans chaque "icône" sont détectées.

Dans une autre méthode de détection des bords du vaisseau, on peut rechercher la corrélation du profil d'intensité transversalement au vaisseau avec des créneaux de différentes largeurs.

Du fait de cette étape, le procédé de l'invention est très différent du procédé connu qui déterminait tous les bords de tous les vaisseaux de l'image à pleine résolution pour pouvoir identifier les points situés sur la ligne de centre. Le procédé selon l'invention est donc très économique en calculs, puisque les bords ne sont détectés que dans les icônes.

La gravité des sténoses est ensuite déterminée. A cet effet, une fois déterminés les bords du vaisseau on détermine la distance minimale qui existe entre les bords du vaisseau dans cette icône en examinant les profils d'intensité. A ce moment une décision est prise pour indiquer si le rétrécissement correspond réellement à une anormalité.

### ETAPE 4 -Détection des fausses alarmes

Cette étape est représentée par le bloc 4 de la FIG.2 (notée N.N).

Toutes les situations conduisant à des sténoses sont répertoriées, ainsi que toutes situations conduisant à des fausses alarmes, c'est-à-dire par exemple les changements de direction brusques des vaisseaux, certains embranchements etc... Il y a dans cette étape un aspect humain, manuel, dans le but de mettre en oeuvre une phase d'apprentissage neuronal supervisée.

### 4-1 Entraînement du classifieur neuronal

Cette tâche est effectuée une seule fois par la personne qui développe l'algorithme ou "Professeur". Un seul réseau de neurones suffit pour un grand nombre de séquences vidéo provenant de systèmes d'acquisitions similaires. Afin d'effectuer l'apprentissage supervisé du classifieur, on sélectionne un ensemble d'images individuelles. Une interface graphique interactive permet au Professeur de localiser, pour chacune de ces images, un ensemble de régions rectangulaires contenant des vraies sténoses ou de fausses alarmes typiques. Chacune des régions rectangulaires ainsi définie reçoit une étiquette codant la catégorie de l'objet pouvant être détecté à l'intérieur de la fenêtre rectangulaire.

Ces catégories comprennent les sténoses des plus bénignes aux plus sérieuses (catégorie 1 à 5) ainsi que les situations typiques pouvant donner lieu à de fausses alarmes (catégories 6 à 12). Les catégories correspondant aux fausses alarmes typiques sont les suivantes :
- un vaisseau voisin d'un point d'embranchement et donnant lieu à une estimation erronée de son orientation,
- un vaisseau normal avec un faible rétrécissement apparent,
- une extrémité de vaisseau normal,
- un vaisseau ayant une courbure locale dans un plan orthogonal à l'image,
- une sténose candidate détectée à l'intérieur de l'aorte,
- un vaisseau normal avec une courbure locale dans le plan de l'image,
- un détail linéaire du fond détecté comme un vaisseau avec sténose.

### 4-2 Réseau de neurones pour élimination de fausses alarmes

On utilise un réseau de neurones avec une couche cachée, et deux sorties pour l'élimination des fausses alarmes. En entrée, on présente au réseau de neurones, un vecteur dont les composantes sont des traits caractéristiques d'une sténose candidate détectée selon le procédé décrit ci-dessus. Ce vecteur peut, par exemple, être constitué des intensités des pixels de l'icône de la sténose candidate. Les deux sorties du réseau de neurones codent la classe des non-sténoses (sortie 1) et celle des sténoses (sortie 2) respectivement. Une fois ramenées à l'intervalle (0,1) par transformation affine, les deux activations de sortie du réseau peuvent s'interpréter comme des probabilités d'appartenance à la classe 1 ou 2 étant donné le vecteur de traits caractéristiques (probabilités à posteriori). Ces deux probabilités sont stockées pour chacune des sténoses candidates. Ceci permet à l'utilisateur de définir lui-même le degré de confiance, sur une échelle de probabilité, pour conserver ou rejeter une sténose candidate. Le stockage des probabilités permet à l'utilisateur d'essayer plusieurs niveaux de confiance sans avoir à reprendre l'ensemble de la procédure de détection et de reconnaissance de sténoses décrite ci-dessus. Une procédure de visualisation graphique met en évidence les sténoses retenues dans chacune des images individuelles.

En référence avec les FIG.5, il apparaît que 25 sténoses avaient été retenues à l'issue de l'ETAPE 4 sur la FIG.5A. Après traitement neuronal de l'ETAPE 4, seulement 5 sténoses seront retenues comme montré sur la FIG.5B.

### 4-3 Analyse statistique de la classification neuronale

La FIG.6 représente la courbe ROC (Receiver Operating Curve) qui résume la performance statistique du classifieur neuronal. Chaque point de cette courbe correspond à un choix différent du Niveau de Confiance de la Sténose (NCS). La valeur de NCS peut être réglée par l'utilisation entre 0 et 1. En fixant NCS à une valeur proche de l'unité (0,85 par exemple), le classifieur neuronal ne retiendra que les sténoses les plus évidentes ; dans ce cas, le taux de fausses alarmes F.A. sera faible (axe horizontal) au prix d'un taux de reconnaissance modeste (axe vertical) pour les véritables sténoses V.S.. La situation opposée correspond à une valeur faible de NCS (0,6 par exemple). Il apparaît que les véritables sténoses V.S. non reconnues correspondent majoritairement aux catégories de sténoses les plus bénignes. Les vaisseaux ayant une courbure locale dans un plan orthogonal à l'image donnent le plus grand nombre de fausses alarmes F.A.

L'utilisation d'un réseau de neurone dans le cadre du procédé de traitement d'image selon l'invention permet donc d'obtenir des résultats statistiquement très satisfaisants dans la détection automatique des sténoses, c'est-à-dire sans assistance d'un opérateur.

## Revendications

1. Procédé de traitement d'images numérisées en imagerie angiographique pour la détection automatique de sténoses comprenant au moins une étape (FIG. 4A) d'identification des pixels ou des points situés sur les lignes centrales des vaisseaux, dite étape de "tracking",
**caractérisé en ce qu'**il comprend ensuite une étape (FIG. 4B) de détection des sténoses par la mesure des intensités des pixels le long des lignes centrales des vaisseaux, cette étape comprenant une sous-étape de décision qu'une zone de pixels est une zone de sténose potentielle lorsque l'intensité de ses pixels subit une variation locale pour prendre une valeur intermédiaire entre l'intensité des pixels de part et d'autre de cette zone, et l'intensité des pixels du fond de l'image ; une sous-étape (FIG. 5A) de délimitation d'une "icône" autour des zones de sténoses potentielles ; et une sous-étape d'extraction des pixels de bords des vaisseaux dans les "icônes", et **caractérisé en ce qu'**il comprend en outre une étape (FIG. 5B) de détermination de la gravité des sténoses et de détermination des fausses alarmes menée à bien par un réseau de neurones qui fournit pour chaque sténose potentielle le taux de probabilité qu'il s'agisse d'une vraie sténose ou d'une fausse alarme.

2. Procédé selon la revendication 1, **caractérisé en ce que** les pixels des bords des vaisseaux sont extraits par une méthode de corrélation des profils d'intensité perpendiculairement à l'axe de la ligne centrale du vaisseau dans l'icône, avec des créneaux.

3. Procédé selon la revendication 1, **caractérisé en ce que** dans l'icône, les bords du vaisseau correspondant à chaque point de la ligne centrale sont déterminés comme les points d'inflexion du profil d'intensité correspondant, perpendiculairement à la ligne centrale du vaisseau, par un calcul de dérivée de ce profil d'intensité.

4. Procédé selon l'une des revendications précédentes
**caractérisé en ce que** l'étape de tracking est précédée d'une étape d'extraction du fond pour fournir l'image des vaisseaux comme des objets contrastant sur un fond sensiblement uniforme.

## Patentansprüche

1. Verfahren zur Verarbeitung von digitalisierten Bildern bei der Anzeige angiographischer Bilder für die automatische Detektion von Stenosen mit mindestens einem Schritt (FIG. 4A) zur Identifizierung der auf der Mittellinie der Gefäße befindlichen Pixel oder Punkte, dem sogenannten "Tracking"-Schritt,
**dadurch gekennzeichnet, daß** es danach einen Schritt (FIG. 4B) zur Detektion von Stenosen über die Messung der Pixelintensitäten entlang der Mittellinien der Gefäße enthält, wobei dieser Schritt einen Unterschritt zur Entscheidung enthält, ob eine Pixelzone eine potentielle Stenosezone ist, wenn die Intensität ihrer Pixel eine lokale Änderung erfährt, um einen Zwischenwert zwischen der Pixelintensität beiderseits dieser Zone und der Pixelintensität des Bildhintergrunds anzunehmen; einen Unterschritt (FIG. 5A) zur Umgrenzung eines "Ikons" um die potentiellen Stenosezonen; und einen Unterschritt zur Entnahme der Pixel von den Gefäßrändern in "Ikonen", und **dadurch gekennzeichnet, daß** es zudem einen Schritt (Schritt 5B) zur Bestimmung der Schwere der Stenosen und zur Bestimmung der Fehlwarnungen durch ein Neuronennetz, die für jede potentielle Stenose eine Wahrscheinlichkeitsrate dafür liefert, ob es sich um eine echte Stenose oder eine Fehlwarnung handelt.

2. Verfahren nach Anspruch 1, **dadurch gekennzeichnet, daß** die Pixel der Gefäßränder mit einer Korrelationsmethode der zur Achse der Mittellinie des Gefäßes im Ikon transversalen Intensitätsprofile entsprechend Kriterien entnommen werden.

3. Verfahren nach Anspruch 1, **dadurch gekennzeichnet, daß** die im Ikon jedem Punkt der Mittellinie entsprechenden Gefäßränder als Beugungspunkte des entsprechenden Intensitätsprofils rechtwinklig zur Mittellinie des Gefäßes mit der Berechnung der Ableitung dieses Intensitätsprofils bestimmt werden.

4. Verfahren nach einem der vorhergehenden Ansprüche, **dadurch gekennzeichnet, daß** dem Tracking-Schritt ein Schritt zur Entnahme des Hintergrunds vorausgeht, um das Gefäßbild wie kontrastierende Objekte auf einem weitgehend einheitlichen Hintergrund zu liefern.

## Claims

1. A method for the processing of digital angiographic images for automatic detection of stenoses, comprising at least a step Fig. 4a for the identification of pixels or points situated on the central lines of vessels, which step is referred to as a tracking step, **characterized in that** it subsequently comprises a step Fig. 4B for the detection of stenoses by measurement of the intensities of pixels along the central lines of the vessels, which step comprises a sub-step for deciding whether a pixel zone is a potential stenosis zone when the intensity of its pixels exhibits a local variation so as to assume an intermediate value between the intensity of the pixels to both sides of this zone and the intensity of the pixels of the background of the image, a sub-step Fig. 5A for defining an icon around potential stenosis zones, and a sub-step for the extraction of the pixels of edges of the vessels in the icons, **characterised in that** it also comprises a step Fig. 5B for determining the seriousness of the stenoses and for determining false alarms, which method is carried out by a neural network which supplies, for each potential stenosis, the probability that it concerns a real stenosis or a false alarm.

2. A method as claimed in Claim 1, **characterized in that** the pixels of the edges of the vessels are extracted by a method for correlating intensity profiles perpendicularly to the axis of the central line of the vessel in the icon with crenellations.

3. A method as claimed in Claim 1, **characterized in that** in the icon the edges of the vessel which correspond to each point of the central line are determined as the points of inflection of the corresponding intensity profile, perpendicularly to the central line of the vessel, by calculation of the derivative of this intensity profile.

4. A method as claimed in one of the preceding Claims, **characterized in that** the tracking step is preceded by a step during which the background is extracted so as to produce the image of the vessels as contrasting objects on a substantially uniform background.
